Europäisches Patentamt

European Patent Office

Office européen des brevets

(11) Publication number: **0 286 768 B1**

# EUROPEAN PATENT SPECIFICATION

(45) Date of publication of patent specification: **29.04.92**  (51) Int. Cl.⁵: **G06K  17/00**

(21) Application number: **87830427.8**

(22) Date of filing: **02.12.87**

(54) **Automatic machine for the reading stamping, and tearing of postal current account receipts.**

(30) Priority: **19.02.87 IT 60887**

(43) Date of publication of application:
**19.10.88 Bulletin  88/42**

(45) Publication of the grant of the patent:
**29.04.92 Bulletin  92/18**

(84) Designated Contracting States:
**AT BE CH DE ES FR GB GR LI LU NL SE**

(56) References cited:
**GB-A- 2 131 353**
**US-A- 4 048 891**
**US-A- 4 472 626**

(73) Proprietor: **Automa di Sensi Giampiero &**
**Biagetti Patrizia - S.n.c.**
**Via S. Maria della Spina, 4**
**I-06081 Assisi (PG) Rivotorto(IT)**

(72) Inventor: **Raspa, Giovanni**
**Via S. Maria della Spina, 4**
**I-06081 Assisi (PG) Loc. Rivotorto(IT)**

(74) Representative: **Baldi, Claudio**
**Piazza Ghislieri, 3**
**I-60035 Jesi (Ancona)(IT)**

EP 0 286 768 B1

## Description

The present invention relates to an automatic machine for reading, cutting and printing stamps on postal current account slips.

Currently, prepared postal current account payment slips, complete with the amount due, the code of the consumer and the postal current account number to be credited are sent to the consumer for the payment of various services, such as electricity, gas or telephone.

These slips consist of three parts, one of these, the receipt, is returned to the consumer once payment has been made, with the payment stamp, date on which payment is made and the name of the receiving office.

These payments are usually made either at a post office, with payment of the amount due to the post office employee by presentation of the payment slip, or at bank counters. In this case, the amount to be paid is debited to the consumer's postal current account with the bank.

To date, only automatic machines capable of printing stamps and cutting the payment slip are available. This is done after receipt of the cash payment by the office employee or after the office employee has controlled that the current account holder has sufficient funds to cover the amount to be debited to the current account.

It should be pointed out that in this technical field there are also some automatic machines able to fill in checks and documents: in this regard patent GB-A-2 131 353 is particularly interesting. It describes a device which is able to print information on documents and checks.

This device is connected to a supermarket till and receives data concerning the total amount of a customer's transaction. One of the customer's cheque form is propelled through a guide channel by a feed roller, past two print heads. The print heads are staggered from each other in both vertical and horizontal directions. One of these print heads prints the amount of the transaction in words and in figures on one line of the cheque form, while the other print head prints payee and date information on another line of the cheque form.

However the patent GB-A-2 131 353 is not able to carry out all the same functions performed by the device according to the invention, which not only fills in a document, but also can perform most complicated and numerous operations.

In fact the aim of this invention is to further simplify postal current account payments with an automatic machine designed not only to print stamps and cut these payment slips but also to read all data and to transfer them to a data processing center which compares the data which those already available and to activate one or other of the functions it can perform, according to the result of the comparison which has been carried out.

Obviously a machine capable of performing these operations should be connected to an electronic control unit, which determines its correct function, and supported by a data processing center capable of providing all the information it requires as well as adequately sorting the information it receives regarding the payment operations carried out.

From the above it is easy to understand that the best, though not only use of the machine in question, is the automatic debiting of the amounts to be paid, with prior verification of the availability of funds by the data processing center. The cashier would therefore only need to indicate the current account number of the consumer, thereby saving him the need to personally check the availability of funds and the accounting operations between the consumer and the supplying office.

The advantages of the automatic machine in question increase if the possibility of combining it to a "Bamcomat" counter, is considered. This would provide clients with a bank service for payment of postal account even out of normal banking hours.

In this case, the user would insert the magnetic "Bancomat" card and the postal current account payment slip into the automatic machine together, according to the invention which is positioned next to the "Bancomat"; by pressing a special pushbutton (Client Payments) on the "Bancomat", the machine is enable to read the data on the payment slip and to transmit these data to the "Bancomat" which, firstly carries out all the necessary control procedures and then enables the machine to make the payment and return the receipt, duly stamped or alternatively, if no funds are available or if the client code has not been recognized, to return the payment slip complete.

Initially, a first version of the machine was produced and protected by the italian patent No. 1189896. This first version includes a mechanism for gripping and drawing the postal payment slip over a guide on which the slip stops in the correct position, ready to be cut and printed, after consent fot he same has been given.

These gripping and pulling mechanism consist in fact of a pair of horizontal, parallel, overlapping friction rollers, one before and one after the cutting section with a guillotine blade operated by an eccentric wheel, cooperating with springs which return the blade to rest position.

There are also two stamping sections before and after the cutting section; both of these are supported on opposite sides of the same blade support guide for cutting the payment slip transversally.

The machine is also fitted with an electronic head for optic reading of all coded data written on the slip and their trasmission to a data processing center.

In the practical realization of this machine and its initial use, it was found that the printing meccanism, mechanical in type, was not versatile enough, above all in terms of quality of the print on the payment slip and in up-dating of the device operated by an electric motor.

In view of these problems, and while maintaining the structural and practical layout of the machine, as describes in the original italian patent, a second version of the machine in question was realized and protected by the italian patent No. 1216941. In the latter version, the mechanical printing unit is replaced wiht a pin matrix printing system, like those used in type writers and calculators, which not only improves the quality of the print but also simplifies the date up-dating.

The use of this pin matrix printing system has not only eliminated all the structural components connected to the previous mechanical printing unit, but has also involved various adaptations and modifications to the overall structure of the machine.

The most important modification is the introduction of components for intermittent forward feed of the ink tape in synchronization with the ink tape of the payment slip, already cut and ready to be returned, so that writing pins can, with each stroke, print on the overlapped tape and paper which have been stopped momentarily.

Clearly, as a consequence of this, the step motors which in the previous version only introduced the slip, and ejected it, after printing and cutting, the two parts from the opposite sides, at a constant speed, currently are not only able to introduce the slip at a constant speed, but also to pull the slip forward intermittently when the parts which have been cut are sorted for stamping; for this purpose one of the two motors is used to drive the intermittent forward feed of the ink tape in synchronization with the intermittent lowering of the pins of the printing heads.

The present invention is defined by the claims.

For major clarity, the description of the invention continues with reference to the enclosed drawings which show an embodiment of the present invention in which:

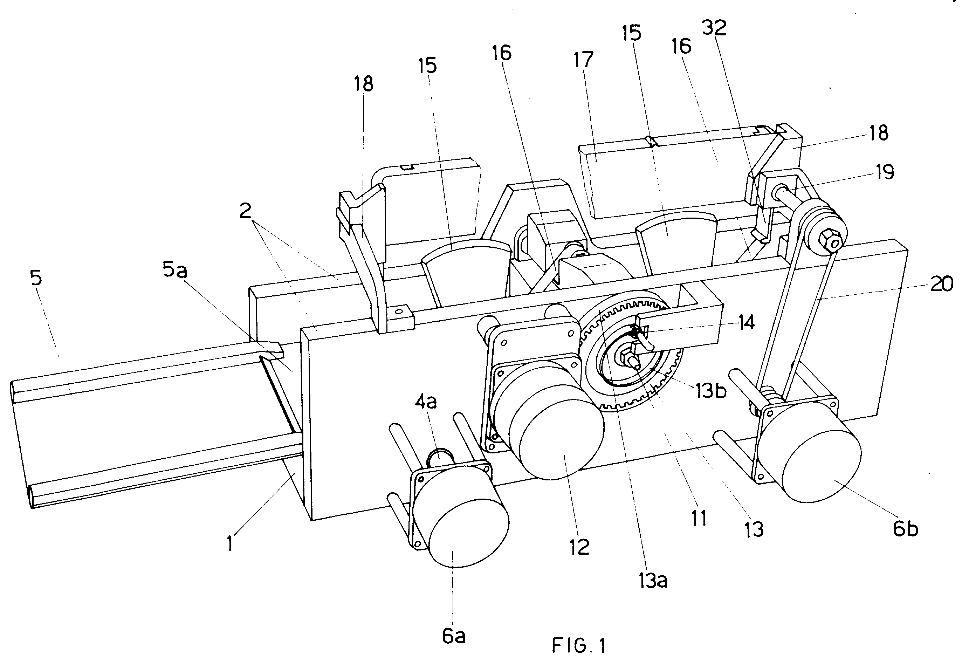

- figure 1 is a schematic axonometric illustration of the machine with a front view of the embodiment of the invention;

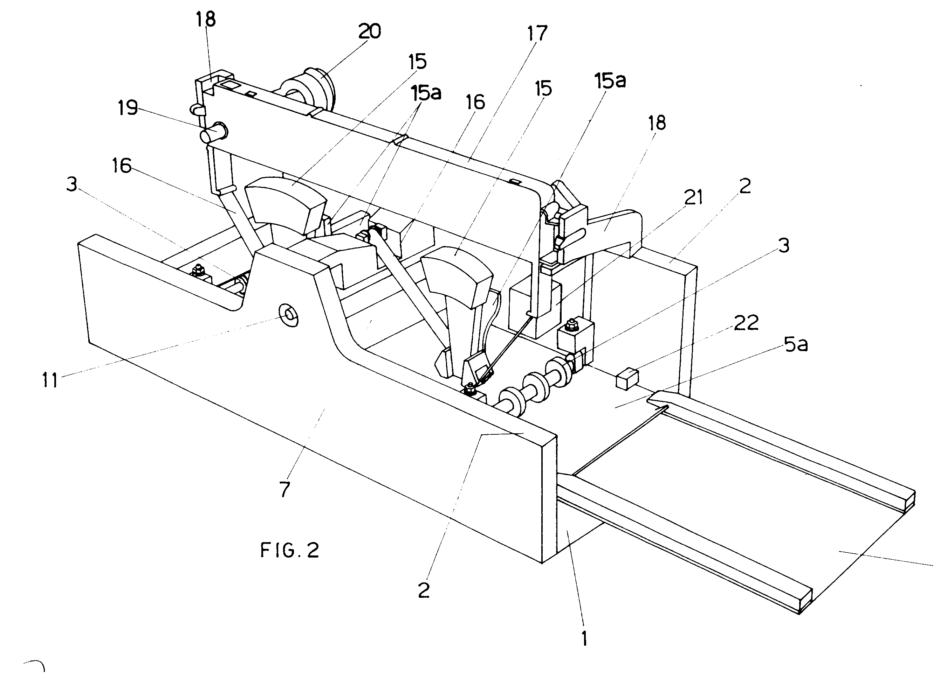

- figure 2 is a schematic axonometric illustration of the embodiment of the invention from the back;

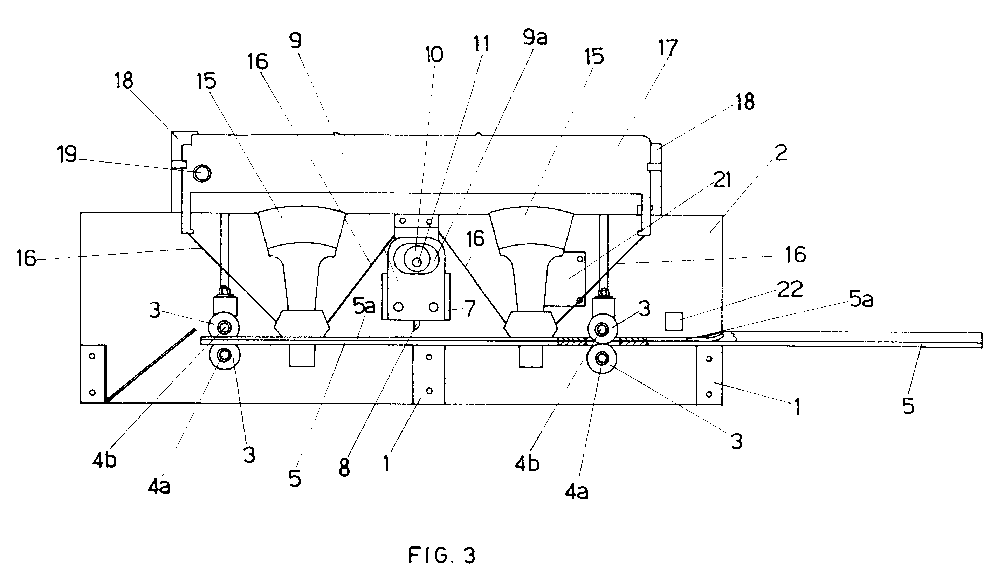

- figure 3 is a schematic orthogonal view of the machine according the embodiment of the invention, without the longitudinal edge.

The cover has been removed in all the figures for better illustration of the machine components.

With reference to the above figures the machine presents an elongated hollow base (1) in the sides of which are two longitudinal edges (2) which create a longitudinal passageway into which the postal payment slip slides perfectly, pulled by two pairs (3) of overlapping friction rollers.

Each pair (3) of rollers is realized by two parallel overlapping shafts (4a and 4b), which cross the above longitudinal passageway transversally, under and above the forward feed track (5), covered by a counter-track (5a) respectively; the pulling action is operated by a pair of friction rollers which operate in conjunction with counter-rollers positioned along the shafts (4a and 4b).

It is obvious that the feed track will have passing slots at the same level as the pairs of pulling rollers, so that the rollers of each pair rotate in contact with each other.

The shafts (4a) supporting each lower set of the pairs of friction rollers (3), are respectively pulled by two first step motors (6a and 6b) while the shafts above (4b) are moved by friction of the rollers (3).

A support guide (7) supporting the transversal blade (8) for cutting the slip can slide vertically between the longitudinal edges (2) in the center, run by two end blocks sliding within the two runners on the internal face of the longitudinal edges (2); this guide hangs on two end brackets (9) at the top of which there are two slots (9a) into which two circular cams (10) fit perfectly. The two cams are mounted eccentrically on a transversal shaft (11) which crosses and rests on the above edges (2).

The rotations of this shaft (11) are driven by a second step motor (12) by means of a drive system with reduction gears consisting of a geared belt (13a) and a geared wheel (13) splined to the end of this shaft (11)

There is a circular collar (13b) outside this geared wheel (13) which rotates between the two elements of a detector (14), which, each time the geared wheel (13) turns, identifies the passage of the only hole on this collar (13b) in order to stop the geared wheel (13) automatically after a complete turn of the wheel itself.

Thanks before to the eccentric cam (10), the guide (7) support brackets (9) are pushed dawn and then lifted again to the tap dead point, for each turn of the geared wheel (13).

Before and after the above cutting unit, there are two identical pin matrix printing heads (15) supported by means of two shelves (15a) screwed to the internal side of the front longitudinal edge (2). These two heads are crossed by the same ink tape (16) which winds in its cartridge (17) which is supported, longitudinally and symmetrically to the machine and above the printing heads (15), by two end shelves (18) fixed to the top edge of the front longitudinal edge (2).

The ink tape (16) is driven by means of a shaft (19), which is passed through a hole on the cartridge (17), pulled by a belt (20) which is driven by one of the two first motors (6b); a free wheel drives the shaft (19) only when the motor (6b) rotates in the direction for pulling the payment slip from the entrance towards the exit, in order to prevent the ink tape (16) from rewinding in the cartridge (17) should the motor (6b) rotate in the direction for pushing the uncut and unprinted payment slip towards the exit.

It is evident that the counter-track (5a) must be provided with slots at the same level as the writing heads (15) in order to allow the pins to print on the slip below, in conjunction with the ink tape (16) placed there between.

Number (21) indicates the electronic reading head positioned an one of the longitudinal edges (2) close to the entrance for the slip. This is read through a small window on the counter-track (5a) which naturally must also have slots at the same level as the writing heads, the blade and the friction rollers.

The stop and start of the two first motors (6a and 6b) are controlled by an optic switch (22) whose luminuous band is interrupted as the slip passes through a small slot on the track (5) and on the counter-track (5a).

This description will make the operation of the automatic machine according to the invention, more easy to understand.

The machine is switched an either by the cashier who presses a pushbutton or when the "Client Payment" pushbutton is pressed on the "Bancomat" counter. The insertion of the slip between the track (5) and counter-track (5a) is immediately detected by two optic switches (22) which operate the two first motors (6a and 6b) so that these rotate in the same direction; the pulling movement occurs for as long as the optic switch (22) detects the passage of the edge of the slip, since it is preset so that the slip stops at the broken cutting line exactly under the blade (8). While the slip moves forward, the electronic reading head (21) rads all the data an the slip and transmits these to the data processing center.

If the code of the current account holder is not identified or if there are not sufficient funds for the payment, the electronic control unit rotates the two first step motors (6a and 6b) contrary to the previous direction in order to eject the slip.

If the data processing center identifies the client code and there are sufficient funds available, the electronic control unit operates the second step motor (12) which lowers the guides (7) to which the slip cut corresponds; the two first motors (6a and 6b) start rotating in opposite directions intermittently while the two halves of the slip are being printed by the writing heads and then continuously to eject the two halves in opposite directions, after printing has been completed.

Once this operation has been completed, the receipt will be returned, duly stamped to the user, while the other half of the slip will be stored.

## Claims

1. Automatic machine for reading, cutting and printing stamps an postal current account slips, the machine comprising:
   - a guide channel consisting of a feed track (5) in conjunction with a counter-track (5a), both tracks being positioned over a hollow base (1) to the sides of which base are fixed two longitudinal side walls (2); the machine further including two pairs of friction rollers (3) placed above and below the guide channel for moving the slips there along, each roller being connected to a respective shaft (4a), and one pair of rollers (3) being placed before and one after a central cutting unit; two first motors (6a and 6b) for driving a respective one of each pair of rollers; the central cutting unit consisting of a guide (7) which supports a transversal blade (8), two end brackets (9) and two circular cams (10) respectively located in the two end brackets, the cams being mounted eccentrically on a transversal shaft (11), which transversal shaft is connected to a second motor (12) by means of a drive system with reduction gears consisting of a geared wheel (13) connected to the end of the transversal shaft (11) so that by rotating the eccentric cams (10), the brackets (9) supporting the guide (7) are pushed down and lifted again to the top dead point for each turn of the geared wheel (13);
   - two identical printing section symmetrically positioned before and after the cutting unit, consisting of two pin matrix writing heads (15) supported by two support shelves (15a), which are screwed to the internal face of one of the two longitudinal side walls (2); an ink tape (16) used by both heads which is wound within a cartridge (17) supported longitudinally and symmetrically to the machine and above the printing heads (15) by means of two end shelves (18) fixed to the top edge of one of the two longitudinal side walls (2); a further shaft (19) for driving the ink tape (16), which further shaft is connected to one of the two first motors (6b) by a belt (20) and a free wheel which enable the ink tape to be moved only when said one of the two first motors (6b) rotates so as to eject the slip from the machine thus preventing the ink tape from being rewound into the cartridge (17); the counter-track (5a) further including slots at the same level as the printing heads (15) in order to allow the writing pins to print on the slip below in conjunction with the ink tape (16) placed there between;

- an electronic head (21) for reading the data contained an the slips, which head is placed an one of the longitudinal side walls (2) close to the slip entrance;

- an optic switch (22) which controls the stop and start of the first motors (6a and 6b) when the switch detects the passage of the front edge and the back edge of the slip, the optic switch (22) being placed on one of the longitudinal side walls (2) so that a standard size slip stops at its broken cutting line exactly under the blade (8);

- the machine operating so that if said data consisting of the client's code is identified and if there are sufficient funds for the payment available, an electronic control unit operates the second motor (12) which through the eccentrically mounted cams (10) lowers the blade (8) which cuts the slip, and subsequently activates the two first motors (6a, 6b) and the printing heads; if however the client's code is not identified or there are not sufficient funds, the electronic control unit activates bath the first motors (6a and 6b) so as to eject the slip from the machine.

2. Automatic machine for reading, cutting and printing stamps on postal current account payment slips, according to claim 1, characterized in that the second motor (12) stops each time the geared wheel (13) has completed a full turn; and in that the second motor (12) rotates the transversal shaft (11) by means of the geared wheel (13), so as to lift and lower the guide (7).

**Revendications**

1. Machine automatique pour la lecture, le timbrage et le découpage de bulletins de compte courant postal, caractérisée en ce qu'elle consiste: - d'une piste d'acheminement (5) qui coopère avec une contre-piste la surplombant (5a) positionnées au-dessus d'une base creuse (1) sur laquelle sont fixées, latéralement, deux parois longitudinales latérales (2); cette machine consistant aussi en: deux couples de rouleaux de friction (3) positionnés au-dessus et au-dessous du couloir d'acheminement des bulletins, étant prévu que chacun des rouleaux (3) soit calé sur un petit arbre (4a) et qu'un des couples de rouleaux (3) soit place avant et l'autre après le poste de découpage;

- deux petits moteurs à pas (6a, 6b), chacun préposé à l'entraînement d'un des couples de rouleaux (3);

- un poste central de découpage qui consiste en un traîneau (7) qui supporte une lame transversale (8), deux étriers d'extrémité (9), ainsi que deux cames circulaires (10) respectivement nichées dans les susdits étriers d'extrémité (9), étant prévu que les susdites cames (10) soit montées de manière excentrique sur un petit arbre transversal (11) couplé à un deuxième petit moteur à pas (12) au moyen d'un système de transmission avec réduction consistant en une roue dentée (13) calée à l'extrémité de l'arbre transversal (11) afin que, grâce à la rotation des cames (10), les étriers de support (9) du traîneau (7) soient poussés vers le bas et a nouveau soulevés vers le haut jusqu'à un point mort supérieur, ceci à chaque tour de la roue dentée (13);

- deux postes identiques d'imprimerie, placés symétriquement en amont et en aval du groupe de découpage susdit et qui consistent en deux têtes d'imprimerie matricielle à aiguilles (15), supportées au moyen de deux tablettes de support (15a) qui sont vissées sur la face interne du bord longitudinal frontal (2); un ruban d'encrage (16) asservi au deux têtes imprimantes (15) s'enroule dans sa cartouche (17) supportée, sur le plan de symétrie longitudinale de la machine et placé sur les susdites têtes imprimantes (15), par deux tablettes d'extrémité (18) fixées sur le bord supérieur du bord longitudinal frontal (2); un petit arbre (9) étant prévu pour l'entraînement du ruban d'encrage (16), ce petit arbre (19) étant relié avec l'un des deux premiers petits moteurs à pas (6b) au moyen d'une petite courroie (20) et supportant une roue libre qui permet au ruban d'encrage (16) d'avancer uniquement quand le susdit petit moteur (6b) tourne dans le sens de l'expulsion du bulletin de la machine, de manière à empêcher que le ruban d'encrage (16) s'enroule dans sa cartouche (17); étant aussi prévu que sur la contre-piste (5a) des fentes en correspondance des têtes imprimantes (15) soient pratiquées afin de permettre aux aiguilles imprimantes d'intervenir sur le bulletin positionné au-dessous en coopérant avec le ruban d'encrage (16) placé entre les deux;
- une tête électronique (21) pour la lecture des données indiquées sur le bulletin et placée sur l'un des deux bords longitudinaux (2) près de l'entrée du bulletin;
- un interrupteur optique (22) qui commande le départ et l'arrêt des deux premiers petits moteurs à pas (6a, 6b) lorsqu'il détecte le passage du bord supérieur ou de celui postérieur du bulletin; étant prévu que le susdit interrupteur optique (22) soit positionné le long de la paroi longitudinale (2) de manière à ce que le bulletin, dont la longueur est standardisée, s'arrête sur la ligne en pointillé de découpage exactement sous la lame (8); étant prévu que la machine travaille de manière telle que, si les données qui indiquent le code du client sont identifiées et que les fonds suffisants au paiement sont disponibles, une centrale électronique de commande mette en fonction le deuxième moteur à pas (12) qui, grâce aux cames (10) montées de manière excentrique, abaisse la lame (8) qui coupe le bulletin et successivement mette en fonction les deux premiers petits moteurs à pas (6a, 6b), ainsi que les têtes imprimantes (15); tandis que si le code du client n'est pas identifié, ou si les fonds nécessaires au paiement ne sont pas disponibles, la centrale de commande mette en fonction les deux premiers petits moteurs (6a, 6b) de manière a expulser de la machine le bulletin sans suite.

2. Machine automatique pour la lecture, le timbrage et le découpage de bulletins de compte courant postal, selon la revendication 1), qui consiste en ce que le deuxième petit moteur (12) s'arrête chaque fois que la roue dentée (13) a accompli un tour complet et en ce que le susdit petit moteur (12) entraîne en rotation le petit arbre transversal (11) au moyen de la roue dentée (13) afin de déterminer le soulèvement et l'abaissement du traîneau (7).

**Patentansprüche**

1. Automatisches Gerät zum Lesen, Stempeln und Durchschneiden von Post-Girokonto-Zahlscheinen, dadurch gekennzeichnet, daß es folgende Teile umfaßt:
   - eine Gleitpiste (5) zusammenwirkend mit einer darüberliegenden Gegenpiste (5a), beide über einer Hohlbasis (1) angebracht, an deren Seiten zwei Längswände (2) befestigt sind; dieses Gerät umfaßt darüberhinaus: zwei Paare von Friktionsrollen (3), die ober- und unterhalb der Zahlschein-Gleitpiste angebracht sind, wobei vorgesehen ist, daß jede der Rollen (3) auf je eine Welle (4a) aufgesteckt ist und daß eines der Rollenpaare (3) sich vor und eines hinter der Schneidestation befindet;
   - zwei Schrittmotoren (6a, 6b), jeder bestimmt zum Antrieb eines der Rollenpaare (3);
   - eine zentrale Schneidestation bestehend aus einem Schlitten (7) zur Halterung von einer Querklinge (8), zwei Außenbügeln (9) und zwei Rundnocken (10), jeweils innerhalb der besagten Außenbügel angebracht, wobei vorgesehen ist, daß diese Nocken exzentrisch auf einer Querwelle (11) montiert werden, die mittels eines Untersetzungsgetriebes, bestehend aus einem auf das Ende der Querwelle (11) aufgesteckten Zahnrad (13), mit einem zweiten Schrittmotor (12) verbunden ist, so daß aufgrund der Rotation der Nocken (10), die Halterungsbügel (9) des Schlittens (7) bei jeder Umdrehung des Zahnrades (13) nach unten gedrückt und dann erneut bis zum Totpunkt angehoben werden;
   - zwei gleiche Stempelstationen, symmetrisch vor und nach der besagten Schneidegruppe angebracht, bestehend aus zwei Nadeldruckköpfen (15), welche von zwei Halterungsleisten (15a) getragen werden, die an der Innenseite der vorderen Längswand (2) angeschraubt sind;

ein Farbband (16), welches für beide Druckköpfe (15) dient, wird in der entsprechenden Kartusche (17) aufgerollt, welche auf der Längssymmetrieebene des Gerätes und oberhalb der besagten Druckköpfe (15) von zwei Außenleisten (18) gehalten wird, die am oberen Rand der vorderen Längswand (2) angebracht sind, wobei eine Mitnehmer-Welle (19) für das Farbband (16) vorgesehen ist, die über einen Riemen (20) mit einem (6b) der beiden ersten Schrittmotoren verbunden ist und ein freies Rad trägt, das ein Vorrücken des Farbbandes (16) nur dann erlaubt, wenn sich der besagte Schrittmotor (6b) so bewegt, daß der Zahlschein aus dem Gerät ausgestoßen wird und somit verhindert, daß das Farbband (16) wieder in die Kartusche (17) aufgerollt wird, wobei des weiteren vorgesehen ist, daß sich auf der besagten Gegenpiste (5a) Schlitze für die Druckköpfe (15) befinden, um den Drucknadeln im Zusammenspiel mit den dazwischenliegenden Farbband (16) ein Schreiben auf dem darunterliegenden Zahlschein zu ermöglichen;
- ein elektronischer Lesekopf (21) zum Ablesen der auf dem Zahlschein enthaltenen Daten, angebracht auf einer der beiden Längswände (2) am Eingang des Zahlscheines;
- ein fotoelektrischer Schalter (22), der das Anlaufen und Stoppen der beiden ersten Schrittmotoren (6a, 6b) steuert, sobald das Durchlaufen des oberen oder des rückwärtigen Randes des Zahlscheines festgestellt wird, wobei der fotoelektrische Schalter (22) an der Längswand (2) angebracht wird, damit die gestrichelte Linie des Zahlscheines, dessen Länge genormt ist, genau unter die Klinge (B) zu liegen kommt, wobei vorgesehen ist, daß die Maschine so funktioniert, daß im Falle einer Erkennung des Kundencodes und ausreichender Deckung zur Ausführung der Zahlung eine elektronische Steuerzentrale den zweiten Schrittmotor (12) in Gang setzt, welcher mittels exzentrisch montierter Nocken (10) die den Zahlschein durchschneidende Klinge (B) senkt, und anschließend die ersten beiden Schrittmotoren (6a, 6b) sowie die Druckköpfe (15) betätigt; wenn hingegen der Kundencode nicht identifiziert wird oder keine ausreichende Deckung gegeben ist, betätigt die elektronische Steuerzentrale beide erste Schrittmotoren (6a, 6b), um den Zahlschein unverändert aus dem Gerät auszustoßen.

2. Automatisches Gerät zum Lesen, Stempeln und Durchschneiden von Post-Girokonto-Zahlscheinen gemäß Anspruch 1, dadurch gekennzeichnet, daß der zweite Motor (12) jedesmal dann anhält, wenn das Zahnrad (13) eine volle Umdrehung zurückgelegt hat und dadurch gekennzeichnet, daß der besagte Motor (12) die Querwelle (11) mittels eines Zahnrades (13) dreht, um ein Anheben und Senken des Schlittens (7) zu bewirken.

FIG. 1

FIG. 2

FIG. 3